# EUROPEAN PATENT APPLICATION

(11) **EP 1 956 700 A1**
(43) Date of publication of application: **13.08.2008**
(21) Application number: 06834069.4
(22) Date of filing: 29.11.2006
(51) Int. Cl.: H02M 3/155

(54) **DC-DC CONVERTER FOR ELECTRIC AUTOMOBILE**

(30) Priority: 29.11.2005 JP 2005343426
(71) Applicant: TOYOTA JIDOSHA KABUSHIKI KAISHA, Toyota-shi, Aichi 471-8571 (JP)
(72) Inventor: NOZAWA, Natsuki, Toyota-shi, Aichi 471-8571 (JP); IWATA, Shuichi, Toyota-shi, Aichi 471-8571 (JP)
(74) Representative: Albutt, Anthony John
(86) International application number: PCT/JP2006/324314
(87) International publication number: WO 2007/064020

(57) **Abstract**

Provided is a cost-reduced DC-DC converter for an electric automobile. This DC-DC converter (20) is interposed between an accumulation device (10) and a drive motor of the electric automobile for raising the electric power of the accumulation device (10) at the power driving time of the drive motor by using a reactor (L1), a boosting switching element (Q2) and a boosting diode (D1), and for lowering a regenerative electric power at the regenerating time of the drive motor by using the reactor (L1), a step-down switching element (Q1) and a step-down diode (D2). The boosting switching element (Q2) has a higher current allowance than that of the step-down switching element (Q1).

## Description

### Technical Field

The present invention relates to a DC-DC converter for an electric automobile interposed between an accumulation device and a drive motor of the electric automobile.

### Background Art

In recent years, hybrid vehicles using both an engine and a motor as driving sources have come into wide use. A hybrid vehicle generally has a battery in addition to the existing engine, an inverter that converts DC power of the battery to AC power, and a drive motor that is driven by an alternating current converted by the inverter.

One type of hybrid vehicle has a DC-DC converter between the battery and the inverter (for example, see International Publication No. WO2003/015254A1). The DC-DC converter raises electric power of the battery for supplying the electric power to the inverter at the time of power driving by the drive motor and lowers the regenerative electric power from the inverter to charge the battery at the time of regenerating of the drive motor.

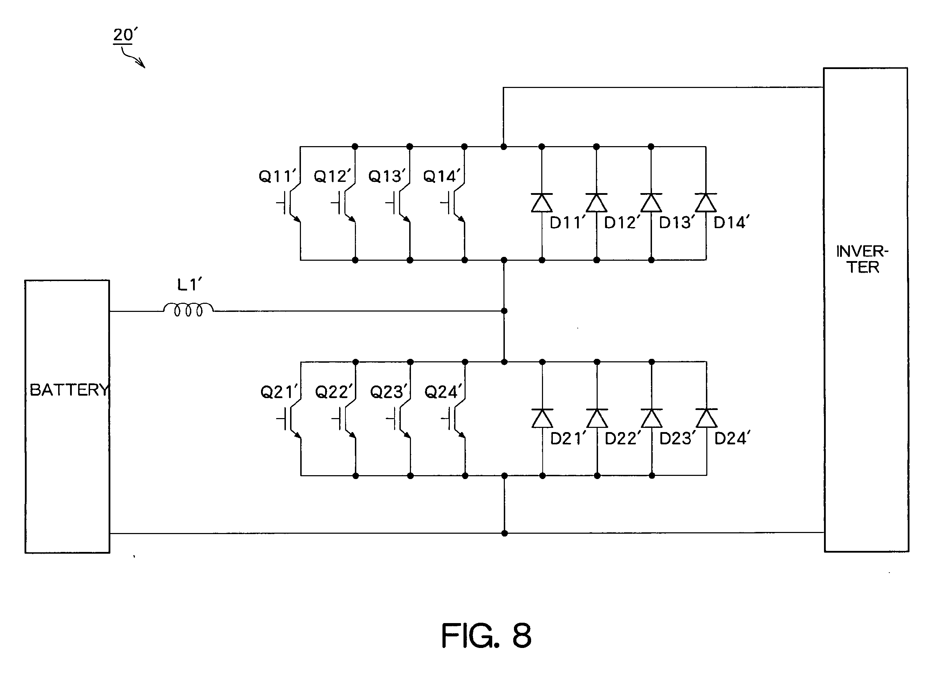

Fig. 8 is a view schematically showing the configuration of a DC-DC converter for an electric automobile in the related art. Referring to Fig. 8, a DC-DC converter 20' for an electric automobile is formed of a chopper circuit that includes IGBTs (Insulated-Gate Bipolar Transistors) Q11' through Q14' in the upper arm, IGBTs Q21' through Q24' in the lower arm, diodes D11' through D14' in the upper arm, diodes D21' through D24' in the lower arm, and a reactor L1'. From the viewpoint of suppressing a heat value per element, in the respective upper and lower arms multiple (four in Fig. 8) IGBTs are connected in parallel and multiple (four in Fig. 8) diodes are connected in parallel.

Japanese Patent No. 3692993 discloses a control method of a DC-DC converter, by which the switching frequency of a switching element is set in response to a load request output on the basis of the loss characteristic of the DC-DC converter.

Also, Japanese Patent Laid-Open Publication No. Hei 10-70889 discloses an inverter circuit formed by connecting to a bridge multiple arms each having multiple switching elements connected in parallel to one another.

In addition, Japanese Patent Laid-Open Publication No. 2003-274667 discloses use of sense-IGBTs in the lower arm of a 3-phase full-bridge circuit and connecting two diodes in parallel between the collector and the main emitter and between the collector and the sense emitter.

### Disclosure of the Invention

The invention provides a cost-reduced DC-DC converter for an electric automobile.

A DC-DC converter for an electric automobile according to the invention is a DC-DC converter for an electric automobile interposed between an accumulation device and a drive motor of the electric automobile for raising electric power of the accumulation device by means of a reactor, a boosting switching element, and a boosting diode at the time of power driving by the drive motor and for lowering regenerative electric power by means of the reactor, a step-down switching element, and a step-down diode at the time of regenerating of the drive motor, and wherein a current allowance of the boosting switching element is larger than a current allowance of the step-down switching element.

According to one aspect of the invention, the boosting switching element is formed of multiple switching elements connected in parallel to one another, and the number of elements, which are the switching elements connected in parallel, is larger in the boosting switching element than in the step-down switching element.

Also, according to another aspect of the invention, the multiple switching elements forming the boosting switching element and the step-down switching element are almost identical to one another.

Also, according to still another aspect of the invention, heat release efficiency of the boosting switching element is higher than heat release efficiency of the step-down switching element.

Also, according to still another aspect of the invention, an element area of the boosting switching element is larger than an element area of the step-down switching element.

Also, according to still another aspect of the invention, heat resistance of the boosting switching element is higher than heat resistance of the step-down switching element.

Also, according to still another aspect of the invention, the DC-DC converter further includes controller that substantially inhibits passage of electricity through the boosting switching element when a detection temperature of the boosting switching element has reached a specific boosting upper limit temperature, and substantially inhibits passage of electricity through the step-down switching element when a detection temperature of the step-down switching element has reached a specific step-down upper limit temperature, and the DC-DC converter is configured in such a manner that the boosting upper limit temperature becomes higher than the step-down upper limit temperature.

Also, according to still another aspect of the invention, each of the boosting switching element and the step-down switching element is formed of multiple switching elements connected in parallel to one another, and the controller substantially inhibits passage of electricity when a highest detection temperature among multiple detection temperatures of the multiple switching elements forming the boosting switching element has reached the boosting upper limit temperature.

Also, according to still another aspect of the invention, the multiple switching elements forming the boosting switching elements and the step-down switching elements are almost identical to one another.

Also, according to still another aspect of the invention, a current allowance of the boosting diode is also larger than a current allowance of the step-down diode.

Another DC-DC converter for an electric automobile according to the invention is a DC-DC converter for an electric automobile interposed between an accumulation device and a drive motor of the electric automobile for raising electric power of the accumulation device by means of a reactor, a boosting switching element, and a boosting diode at the time of power driving by the drive motor and for lowering regenerative electric power by means of the reactor, a step-down switching element, and a step-down diode at the time of regenerating of the drive motor, and wherein a current allowance of the boosting diode is larger than a current allowance of the step-down diode.

According to still another aspect of the invention, the boosting diode is formed of multiple diodes connected in parallel to one another, and the number of elements, which are the diodes connected in parallel, is larger in the boosting diode than in the step-down diode.

Also, according to still another aspect of the invention, the multiple diodes forming the boosting diode and the step-down diode are almost identical to one another.

Also, according to still another aspect of the invention, heat release efficiency of the boosting diode is higher than heat release efficiency of the step-down diode.

Also, according to still another aspect of the invention, an element area of the boosting diode is larger than an element area of the step-down diode.

Also, according to still another aspect of the invention, heat resistance of the boosting diode is higher than heat resistance of the step-down diode.

Amotor driving device for an electric automobile according to the invention is characterized by including any one of the DC-DC converters for an electric automobile described above.

According to the invention, it is possible to provide a cost-reduced DC-DC converter for an electric automobile.

### Brief Description of the Drawings

Fig. 1 is a view schematically showing the configuration of an electric automobile including a DC-DC converter for an electric automobile according to one embodiment.
Fig. 2 is a circuit diagram schematically showing one example of the DC-DC converter for an electric automobile according to a first configuration example.
Fig. 3 is a top view schematically showing one example of a DC-DC converter for an electric automobile according to a configuration (b) of a fourth configuration example.
Fig. 4 is a top view schematically showing one example of a DC-DC converter for an electric automobile according to a configuration (c) of the fourth configuration example.
Fig. 5 is a view showing a boosting load factor limit map.
Fig. 6 is a view showing a step-down load factor limit map.
Fig. 7 is a view schematically showing the configuration of an electric automobile equipped with two drive motors.
Fig. 8 is a view schematically showing the configuration of a DC-DC converter for an electric automobile in the related art.

### Best Mode for Carrying Out the Invention

Hereinafter, an embodiment of the invention will be described with reference to the drawings.

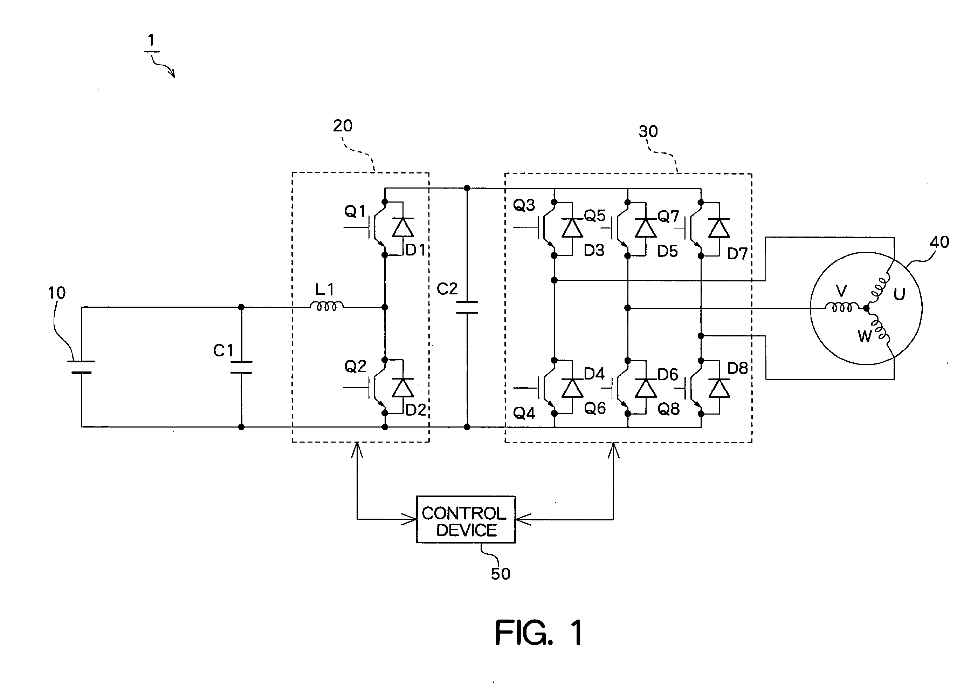

Fig. 1 is a view schematically showing the configuration of an electric automobile 1 including a DC-DC converter 20 for an electric automobile according to the embodiment. The electric automobile 1 is an automobile that drives a vehicle by driving a drive motor on the electric power of an accumulation device. The electric automobile 1 encompasses, for example, a hybrid vehicle (HV), a so-called electric vehicle (EV), and a fuel cell electric vehicle (FCEV), and no particular limitation is imposed on the type thereof.

Referring to Fig. 1, the electric automobile 1 is formed by including an accumulation device 10, a DC-DC converter 20, an inverter 30, a drive motor 40, and a control device 50.

The accumulation device 10 accumulates electric power to output a DC voltage, and used herein is a battery, such as a nickel metal hydride battery or a lithium ion battery. The accumulation device 10, however, may be a large-capacity capacitor or the like.

The DC-DC converter 20 is formed of a chopper circuit that includes switching elements (herein, IGBTs) Q1 and Q2, diodes D1 and D2, and a reactor L1. The switching elements Q1 and Q2 are connected in series between the power supply line of the inverter 30 and the earth line. The collector of the switching element Q1 in the upper arm is connected to the power supply line, and the emitter of the switching element Q2 in the lower arm is connected to the earth line. One end of the reactor L1 is connected to the middle point between the switching elements Q1 and Q2; that is, the connection point of the emitter of the switching element Q1 and the collector of the switching element Q2. The other end of the reactor L1 is connected to the positive electrode of the accumulation device 10. The emitter of the switching element Q2 is connected to the negative electrode of the accumulation device 10. Also, the diodes D1 and D2 are disposed between the collector and the emitter of the switching elements Q1 and Q2, respectively, for allowing a current to flow from the emitter to the collector. A smoothing capacitor C1 is connected between the other end of the reactor L1 and the earth line, and a smoothing capacitor C2 is connected between the collector of the switching element Q1 and the earth line.

The inverter 30 is formed of respective arms in U-phase, V-phase, and W-phase disposed in parallel with one another between the power supply line and the earth line. The U-phase arm is formed of switching elements (herein, IGBTs) Q3 and Q4 connected in series. The V-phase arm is formed of switching elements Q5 and Q6 connected in series. The W-phase arm is formed of switching elements Q7 and Q8 connected in series. Diodes D3 through D8 for allowing a current to flow from the emitter to the collector are disposed between the collector and the emitter of the switching elements Q3 through Q8, respectively.

The drive motor 40 is a 3-phase permanent magnet motor, and it is formed by connecting the one ends of respective three coils in U, V, and W phases commonly at the midpoint. The other end of the U-phase coil is connected to the middle point between the switching elements Q3 and Q4. The other end of the V-phase coil is connected to the middle point between the switching elements Q5 and Q6. The other end of the W-phase coil is connected to the middle point between the switching elements Q7 and Q8.

The control device 50 controls the DC-DC converter 20 and the inverter 30. The control device 50 includes, for example, a CPU (Central Processing Unit), a ROM (Read Only Memory), a main memory, and so forth. Respective functions of the control device 50 are achieved by reading a control program pre-recorded on a recording medium, such as the ROM, into the main memory and running the control program on the CPU. The functions of the control device 50, however, may be achieved by hardware alone, either partially or entirely. Alternatively, the control device 50 may be physically formed of multiple devices.

Operations of the electric automobile 1 having the above configuration will be described separately for the time of power driving and for the time of regenerating.

### (Power Driving Time)

The DC-DC converter 20 raises electric power of the accumulation device 10 to supply the electric power to the inverter 30 under the control of the control device 50. More concretely, the DC-DC converter 20 raises an output voltage of the accumulation device 10 and supplies the output voltage to the inverter 30 by switching ON and OFF the switching element Q2 in the lower arm while the switching element Q1 in the upper arm is maintained in an OFF state. More specifically, when the switching element Q2 comes ON, a current flows into the reactor L1 via the switching element Q2, and DC power from the accumulation device 10 is accumulated in the reactor L1. When the switching element Q2 goes OFF, the DC power accumulated in the reactor L1 is output to the inverter 30 via the diode D1.

The inverter 30 converts the DC power supplied from the DC-DC converter 20 to AC power by switching ON and OFF the switching elements Q3 through Q8 and supplies the AC power thus obtained to the drive motor 40 under the control of the control device 50. The drive motor 40 is thus driven to rotate.

Incidentally, a back electromotive force becomes larger as the drive motor 40 rotates at higher speeds, which causes the maximum torque to drop. The DC-DC converter 20 is provided to eliminate this inconvenience, and is able to increase the maximum torque in the high-rotation region by increasing a voltage to be applied to the drive motor 40 from the inverter 30.

In the above description, the switching element Q1 in the upper arm is maintained in an OFF state. However, it may be configured in such a manner that the switching elements Q1 and Q2 are switched ON and OFF alternately for the switching element Q1 to go OFF when the switching element Q2 is ON and for the switching element Q1 to come ON when the switching element Q2 is OFF. In this case, too, no current will flow into the switching element Q1 in the upper arm and the diode D2 in the lower arm while the electric power is raised.

### (Regenerating Time)

The drive motor 40 operates as an electric power generator and generates AC power to output the AC power to the inverter 30 at the time of braking or deceleration of the electric automobile 1.

The inverter 30 converts AC power generated in the drive motor 40 to DC power and supplies the DC power thus obtained to the DC-DC converter 20 by switching ON and OFF the switching elements Q3 through Q8 under the control of the control device 50.

The DC-DC converter 20 lowers the DC power from the inverter 30 and charges the accumulation device 10 under the control of the control device 50. More concretely, the DC-DC converter 20 lowers an output voltage of the inverter 30 and supplies the output voltage to the accumulation device 10 by switching ON and OFF the switching element Q1 in the upper arm while the switching element Q2 in the lower arm is maintained in an OFF state. More specifically, when the switching element Q1 comes ON, a current flows into the reactor L1 via the switching element Q1 and the DC power from the inverter 30 is accumulated in the reactor L1. When the switching element Q1 goes OFF, a current flows backward via the diode D2 due to an electromotive force of the reactor L1, which allows the DC power accumulated in the reactor L1 to be supplied to the accumulation device 10. The accumulation device 10 is thus charged.

In the above description, the switching element Q2 in the lower arm is maintained in an OFF state. However, it may be configured in such a manner that the switching elements Q1 and Q2 are switched ON and OFF alternately for the switching element Q2 to go OFF when the switching element Q1 is ON and for the switching element Q2 to come ON when the switching element Q1 is OFF. In this case, too, no current will flow into the switching element Q2 in the lower arm and the diode D1 in the upper arm while the electric power is lowered.

As has been described above, in the DC-DC converter 20, the switching element Q2 in the lower arm and the diode D1 in the upper arm are used at the time of power driving (while the electric power is raised) and the switching element Q1 in the upper arm and the diode D2 in the lower arm are used at the time of regenerating (while the electric power is lowered). In other words, the switching element Q2 and the diode D1 are a boosting switching element and a boosting diode, respectively, and the switching element Q1 and the diode D2 are a step-down switching element and a step-down diode, respectively.

Generally, a larger current flows through the DC-DC converter 20 at the time of power driving than at the time of regenerating. Hence, a larger current passes through the boosting switching element Q2 and the boosting diode D1 than through the step-down switching element Q1 and the step-down diode D2, respectively, and heat load is larger in the former than in the latter. In light of the foregoing, this embodiment is configured in such a manner that a current allowance of the boosting switching element Q2 becomes larger than a current allowance of the step-down switching element Q1. Also, it is configured in such a manner that a current allowance of the boosting diode D1 becomes larger than a current allowance of the step-down diode D2.

Hereinafter, first through fourth configuration examples will be described as examples in which the current allowance of the boosting element is made larger than the current allowance of the step-down element. It should be noted that the configurations of the first through fourth configuration examples below can be combined as needed.

### (First Configuration Example)

In this configuration example, from the viewpoint of suppressing a heat value (electric current value passing through the element) per element in response to a difference in electric specification between at the power driving time and at the time of regenerating, the switching elements Q1 and Q2 and the diodes D1 and D2 are configured as follows.

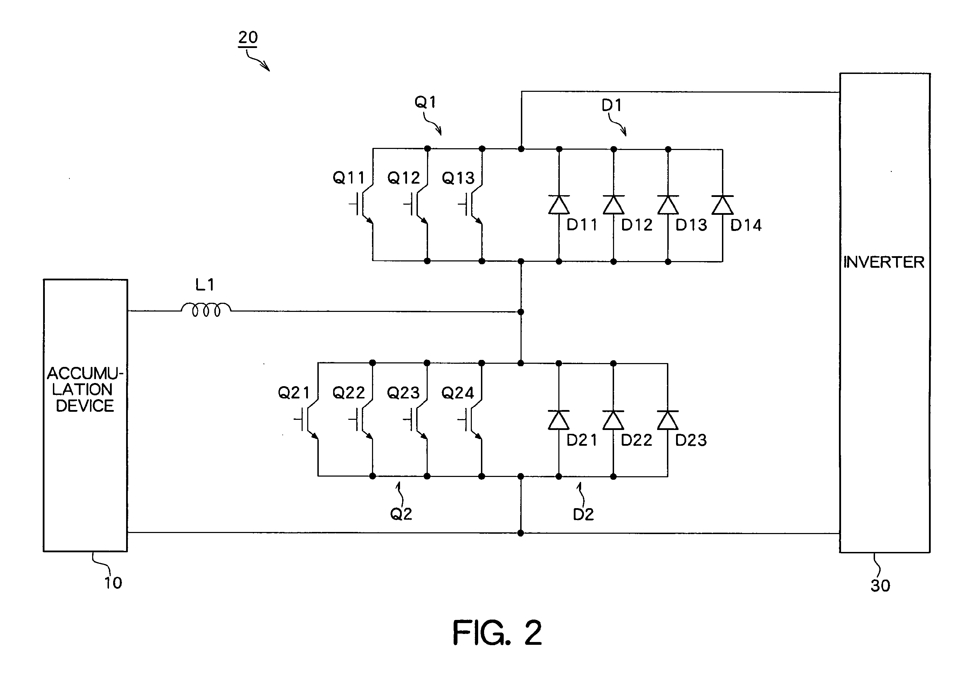

That is, in this configuration example, as shown in Fig. 2, the boosting switching element Q2 is formed of multiple (unit) switching elements connected in parallel to one another, and the number of elements, which are the (unit) switching elements connected in parallel, is larger in the boosting switching element Q2 than in the step-down switching element Q1. Herein, the step-down switching element Q1 may be formed of a single element or multiple (unit) switching elements connected in parallel to one another. In other words, in this configuration example, the boosting switching element Q2 is divided into M unit elements (chips) and the step-down switching element Q1 is divided into N unit elements (chips), where M is an integer equal to or greater than 2, N is an integer equal to or greater than 1, and M > N. Further, in this configuration example, multiple (M + N) switching elements forming the switching elements Q1 and Q2 are almost identical to one another.

More concretely, in the example shown in Fig. 2, the boosting switching element Q2 is formed of four IGBTs Q21 through Q24 connected in parallel, and the step-down switching element Q1 is formed of three IGBTs Q11 through Q13 connected in parallel. The IGBTs Q11 through Q13 and Q21 through Q24 are of identical specifications.

In addition, in this configuration example, as shown in Fig. 2, the boosting diode D1 is formed of multiple (unit) diodes connected in parallel to one another. The number of elements, which are the (unit) diodes connected in parallel, is larger in the boosting diode D1 than in the step-down diode D2. Herein, the step-down diode D2 may be formed of a single element or multiple (unit) diodes connected in parallel to one another. In other words, in this configuration example, the boosting diode D1 is divided into J unit elements (chips) and the step-down diode D2 is divided into K unit elements (chips), where J is an integer equal to or greater than 2, K is an integer equal to or greater than 1, and J > K. Further, in this configuration example, multiple diodes forming the diodes D1 and D2 are almost identical to one another.

More concretely, in the example shown in Fig. 2, the boosting diode D1 is formed of four diodes D11 through D14 connected in parallel and the step-down diode D2 is formed of three diodes D21 through D23 connected in parallel. The diodes D11 through D14 and D21 through D23 are of identical specifications.

### (Second Configuration Example)

In this configuration example, heat release efficiency of the boosting switching element Q2 is higher than heat release efficiency of the step-down switching element Q1.

According to one aspect, the heat release performance of the boosting switching element Q2 itself is higher than the heat release performance of the step-down switching element Q1 itself. For example, the element area of the boosting switching element Q2 is larger than the element area of the step-down switching element Q1.

According to another aspect, cooling means for cooling the switching elements is provided, and the cooling performance to cool the boosting switching elements Q2 is higher than the cooling performance to cool the step-down switching element Q1. For example, in a configuration in which a cooling medium to cool the switching elements is circulated, the boosting switching element Q2 is disposed upstream in the circulation channel of the cooling medium and the step-down switching element Q1 is disposed downstream.

Inaddition, in this configuration example, the heat release efficiency of the boosting diode D1 is higher than the heat release efficiency of the step-down diode D2.

According to one aspect, the heat release performance of the boosting diode D1 itself is higher than the heat release performance of the step-down diode D2. For example, the element area of the boosting diode D1 is larger than the element area of the step-down diode D2.

According to another aspect, cooling means for cooling the diodes is provided, and the cooling performance to cool the boosting diode D1 is higher than the cooling performance to cool the step-down diode D2. For example, in a configuration in which a cooling medium to cool the diodes is circulated, the boosting diode D1 is disposed upstream in the circulation channel of the cooling medium and the step-down diode D2 is disposed downstream.

### (Third Configuration Example)

In this configuration example, element heat resistance of the boosting switching element Q2 is higher than element heat resistance of the step-down switching element Q1. More concretely, the boosting switching element Q2 is made of a high heat-resistance material in comparison with the step-down switching element Q1. For example, the boosting switching element Q2 is an SiC semiconductor element and the step-down switching element Q1 is an Si semiconductor element.

Also, in this configuration example, element heat resistance of the boosting diode D1 is higher than element heat resistance of the step-down diode D2. More concretely, the boosting diode D1 is made of a high heat-resistance material in comparison with the step-down diode D2. For example, the boosting diode D1 is a silicon carbide (SiC) semiconductor element and the step-down diode D2 is a silicon (Si) semiconductor element.

### (Fourth Configuration Example)

In this configuration example, the control device 50 substantially inhibits the passage of electricity through the boosting switching element Q2 when the detection temperature of the boosting switching element Q2 has reached a specific boosting upper limit temperature, and substantially inhibits the passage of electricity through the step-down switching element Q1 when the detection temperature of the step-down switching element Q1 has reached a specific step-down upper limit temperature. The DC-DC converter 20 is configured in such a manner that the boosting upper limit temperature becomes higher than the step-down upper limit temperature. For example, the DC-DC converter 20 is configured in such a manner that the temperature of the boosting switching element Q2 is detected precisely in comparison with the step-down switching element Q1.

The detection temperature of the switching element referred to herein is the temperature of the switching element detected by a temperature sensor.

The phrase, "to substantially inhibit the passage of electricity through the switching element" referred to herein means to limit an amount of electricity passing through the switching element to an amount small enough to prevent damage to the element. According to one aspect, the passage of electricity is inhibited completely.

In a case where the detection temperature of the boosting switching element Q2 has reached the specific boosting upper limit temperature, the electricity may be substantially inhibited from passing not only through the switching element Q2 but also through the switching element Q1. Also, in a case where the detection temperature of the step-down switching element Q1 has reached the specific step-down upper limit temperature, the electricity may be substantially inhibited from passing not only through the switching element Q1 but also through the switching element Q2.

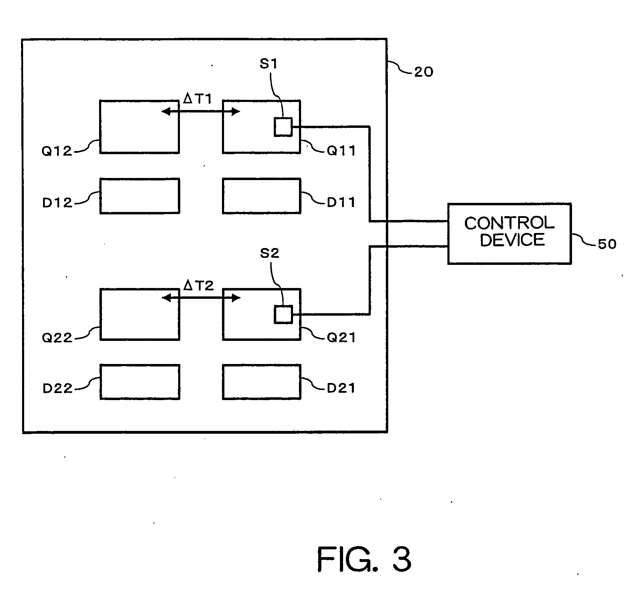

More concretely, in this configuration example, the boosting switching element Q2 and the step-down switching element Q1 are almost identical to each other, and for example, they are elements of identical specifications. When the detection temperature TL of the boosting switching element Q2 has reached the boosting upper limit temperature TL1 (= T1 - ΔTL), the control device 50 substantially inhibits the passage of electricity through the boosting switching element Q2. Also, when the detection temperature TU of the step-down switching element Q1 has reached the step-down upper limit temperature TU1 (= T1 - ΔTU), the control device 50 substantially inhibits the passage of electricity through the step-down switching element Q1. Herein, T1 is the element heat-resistant temperature of the switching elements Q1 and Q2. ΔTL is a margin (allowance) that takes into account a detection error of the temperature of the boosting switching element Q2. ΔTU is a margin that takes into account a detection error of the temperature of the step-down switching element Q1. The DC-DC converter 20 is configured in such a manner so as to establish ΔTL < ΔTU; that is, TL1 > TU1. Examples of such a configuration include but are not limited to configurations (a) through (c) described below. It should be noted that the configurations (a) through (c) may be combined as needed.
(a) The temperature sensor is formed so that the detection accuracy of the temperature for the boosting switching element Q2 becomes higher than the detection accuracy of the temperature for the step-down switching element Q1.
(b) The DC-DC converter 20 has the configuration shown in Fig. 3. More specifically, the boosting switching element Q2 is formed of two switching elements Q21 and Q22 connected in parallel, and the step-down switching element Q1 is formed of two switching elements Q11 and Q12 connected in parallel. The switching elements Q21, Q22, Q11, and Q12 are almost identical to one another, and for example, they are of identical specifications. Also, the boosting diode D1 is formed of two diodes D11 and D12 connected in parallel, and the step-down diode D2 is formed of two diodes D21 and D22 connected in parallel. The diodes D11, D12, and D21, and D22 are almost identical to one another, and for example, they are of identical specifications. In addition, a temperature sensor S1 to detect the temperature of the switching element Q11 and a temperature sensor S2 to detect the temperature of the switching element Q21 are provided. Herein, the detection accuracies of the temperature sensors S1 and S2 are the same.
   When the detection temperature at the temperature sensor S2 (that is, the detection temperature of the switching element Q21) TL has reached the boosting upper limit temperature TL1 (=T1 - ΔTL), the control device 50 substantially inhibits the passage of electricity through the switching elements Q21 and Q22. Also, when the detection temperature at the temperature sensor S1 (that is, the detection temperature of the switching element Q11) TU has reached the step-down upper limit temperature TU1 (=T1 -ΔTU), the control device 50 substantially inhibits the passage of electricity through the switching elements Q11 and Q12.
   Herein, ΔTL is a margin that takes into account a detection tolerance ΔTS of the temperature sensor S2 and a temperature difference ΔT2 between the switching elements Q21 and Q22, and for example, ΔTL = ΔTS + ΔT2. Also, ΔTU is a margin that takes into account a detection tolerance ΔTS of the temperature sensor S1 and a temperature difference ΔT1 between the switching elements Q11 and Q12, and for example, ΔTU = ΔTS + ΔT1.
   The DC-DC converter 20 is configured in such a manner so as to establish ΔT2 <ΔT1. For example, two switching elements having uniform element characteristics are chosen among elements and used as the switching elements Q21 and Q22, so that the temperature difference ΔT2 between the switching elements Q21 and Q22 becomes smaller.
(c) The boosting switching element Q2 is formed of plural switching elements connected in parallel to one another, and the control device 50 substantially inhibits the passage of electricity when the highest detection temperature among multiple detection temperatures of the multiple switching elements has reached the boosting upper limit temperature.

More concretely, each of the boosting switching element Q2 and the step-down switching element Q1 is formed of multiple switching elements connected in parallel to one another, and the multiple switching elements forming the boosting switching element Q2 and the step-down switching element Q1 are almost identical to one another (for example, are of identical specifications). When the highest detection temperature among the multiple detection temperatures of the multiple switching elements forming the boosting switching element Q2 has reached the boosting upper limit temperature, the control device 50 substantially inhibits the passage of electricity. Regarding the step-down side, for example, the temperature of one switching element among the multiple switching elements forming the step-down switching element Q1 is detected, and when the detection temperature of this one switching element has reached the step-down upper limit temperature, the control device 50 substantially inhibits the passage of electricity.

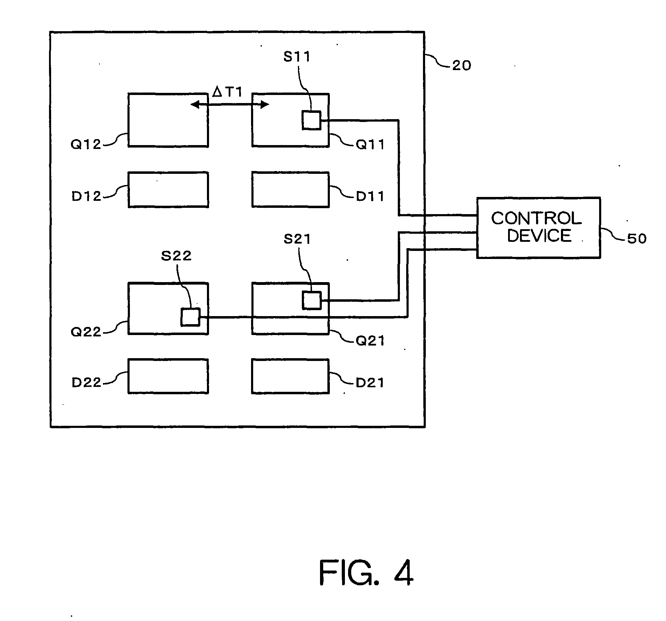

As one example, the DC-DC converter 20 has the configuration shown in Fig. 4. More specifically, the boosting switching element Q2 is formed of two switching elements Q21 andQ22 connected in parallel, and the step-down switching element Q1 is formed of two switching elements Q11 and Q12 connected in parallel. The switching elements Q21, Q22, Q11, and Q12 are almost identical to one another, and for example, they are of identical specifications. Also, the boosting diode D1 is formed of two diodes D11 and D12 connected in parallel, and the step-down diode D2 is formed of two diodes D21 and D22 connected in parallel. The diodes D11, D12, D21, and D22 are almost identical to one another, and for example, they are of identical specifications. A temperature sensor S11 for detecting the temperature of the switching element Q11, a temperature sensor S21 for detecting the temperature of the switching element Q21, and a temperature sensor S22 for detecting the temperature of the switching element Q22 are provided. Herein, the detection accuracies of the temperature sensors S11, S21, and S22 are the same.

When the detection temperature TL, which is one of the detection temperatures of the temperature sensors S21 and S22, whichever is the higher, has reached the boosting upper limit temperature TL1 (=T1 - ΔTL), the control device 50 substantially inhibits passage of the electricity through the switching elements Q21 and Q22. Also, when the detection temperature TU at the temperature sensor S11 has reached the step-down upper limit temperature TU1 (=T1 - ΔTU), the control device 50 substantially inhibits passage of the electricity through the switching elements Q11 and Q12.

Herein, ΔTL is a margin that takes into account a detection tolerance ΔTS of the temperature sensor, and for example, ΔTL =ΔTS. Also, ΔTU is a margin that takes into account a detection tolerance ΔTS of the temperature sensor and a temperature difference ΔT1 between the switching elements Q11 and Q12, and for example, ΔTU = ΔTS + ΔT1. Hence, ΔTL < ΔTU and TL1 > TU1.

Incidentally, as one aspect of the fourth configuration example, the control device 50 may perform load factor limit control to limit the load factor in response to the detection temperature TL of the boosting switching element Q2 and the detection temperature TU of the step-down switching element Q1. Hereinafter, the load factor limit control will be described more concretely.

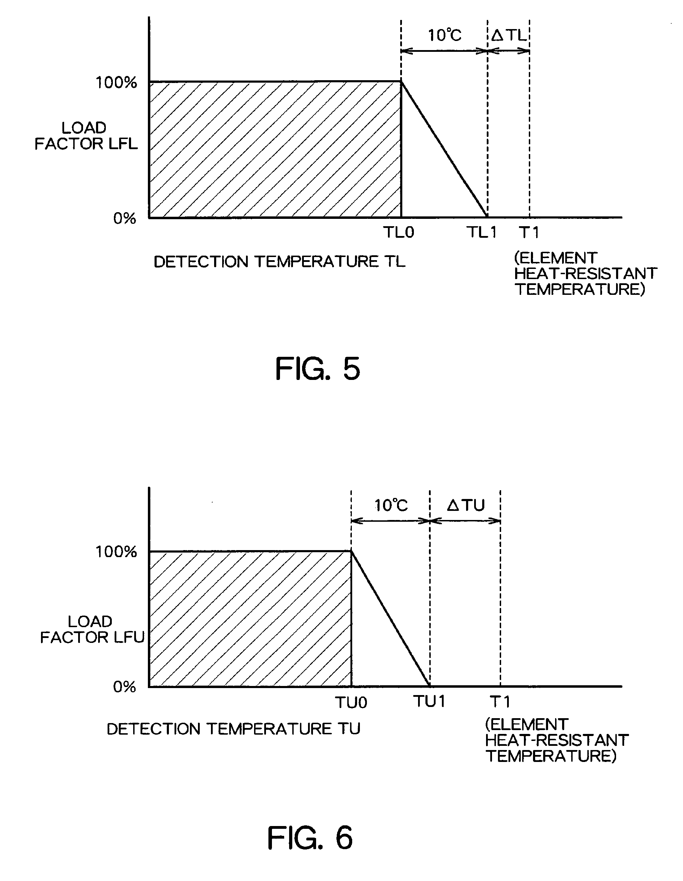

The control device 50 finds a load factor LFL on the basis of a boosting load factor limit map shown in Fig. 5 while it finds a load factor LFU on the basis of a step-down load factor limit map shown in Fig. 6, and limits the load factor to one of the load factors LFL and LFU, whichever has the smaller value.

Regarding the boosting load factor limit map shown in Fig. 5, the abscissa plots the detection temperature TL of the boosting switching element Q2, and the ordinate plots the load factor. The load factor of 100% referred to herein is the maximum discharging power or the maximum charging power of the accumulation device 10. When the detection temperature TL falls within a range lower than the load factor limit control start temperature TL0, the load factor LFL = 100% and the load factor control is not performed. When the detection temperature TL falls within a range as high as or higher than the boosting upper limit temperature TL1, the load factor LFL = 0%. When the detection temperature TL falls within a range from the load factor limit control start temperature TL0 to the boosting upper limit temperature TL1, the load factor LFL is reduced gradually from 100% to 0% with a rise of the detection temperature TL. The load factor limit control start temperature TL0 is, for example, TL1 - 10°C.

Regarding the step-down load factor limit map shown in Fig. 6, the abscissa plots the detection temperature TU of the step-down switching element Q1 and the ordinate plots the load factor. The load factor of 100% referred to herein is the maximum discharging power or the maximum charging power of the accumulation device 10. When the detection temperature TU falls within a range lower than the load factor limit control start temperature TU0, the load factor LFU = 100% and the load factor control is not performed. When the detection temperature TU falls within a range as high as or higher than the step-down upper limit temperature TU1, the load factor LFU = 0%. When the detection temperature TU falls within a range from the load factor limit control start temperature TU0 to the step-down upper limit temperature TU1, the load factor LFU is gradually reduced from 100% to 0% with a rise of the detection temperature TU. The load factor limit control start temperature TU0 is, for example, TU1 - 10°C.

As can be understood from Fig. 5 and Fig. 6, the load factor limit control start temperature TL0 is higher than the load factor limit control start temperature TU0. Also, a region where the load factor control is not performed (regions indicated by shading in Fig. 5 and Fig. 6) is larger on the boosting side than on the step-down side.

According to the embodiment as described above, advantages (1) through (15) as follows can be achieved.
(1) According to the above embodiment, in the DC-DC converter for an electric automobile interposed between an accumulation device and a drive motor of the electric automobile for raising electric power of the accumulation device by means of a reactor, a boosting switching element, and a boosting diode at the time of power driving by the drive motor and for lowering regenerative electric power by means of the reactor, a step-down switching element, and a step-down diode at the time of regenerating of the drive motor, a current allowance of the boosting switching element is larger than a current allowance of the step-down switching element. Hence, according to this embodiment, it is possible to achieve the configuration suitable to the circumstance that an amount of electricity passing through the element is larger in the boosting switching element than in the step-down switching element in the DC-DC converter for an electric automobile. It is thus possible to make the configuration of the DC-DC converter (in particular, the boosting switching element and the step-down switching element) most suitable, which enables a reduction in the cost and size thereof.
(2) According to the first configuration example described above, the boosting switching element is formed of multiple switching elements connected in parallel to one another, and the number of elements, which are the switching elements connected in parallel, is larger in the boosting switching element than in the step-down switching element. It is thus possible to form the boosting switching element and the step-down switching element using an adequate number of elements corresponding to the electric specifications at the time of power driving and at the time of regeneration, which enables a reduction in cost. More concretely, in comparison with the configuration in the related art shown in Fig. 8, the number of elements forming the step-down switching element can be reduced, which makes a cost reduction possible.
(3) Also, according to the first configuration example described above, because the multiple switching elements forming the boosting switching element and thestep-downswitching element are almost identical to one another, the need to prepare multiple types of switching elements can be eliminated, which enables a cost reduction.
(4) According to the second configuration example described above, because heat release efficiency of the boosting switching element is made higher than heat release efficiency of the step-down switching element, it is possible to increase a current allowance of the boosting switching element by reducing a temperature rise of the boosting switching element to a small extent in comparison with the step-down switching element.
(5) According to one aspect of the second configuration example described above, an element area of the boosting switching element is made larger than an element area of the step-down switching element. When configured in this manner, in comparison with the step-down switching element, it is possible to secure a large heat-releasing area with the boosting switching element, which makes it possible to increase the heat release efficiency of the boosting switching element. Also, in comparison with the step-down switching element, a loss in the boosting switching element can be lessened, which enables a reduction in a heat value of the boosting switching element.
(6) According to the third configuration example described above, because heat resistance of the boosting switching element is made higher than heat resistance of the step-down switching element, in comparison with the step-down switching element, the boosting switching element can be used at high temperature, which makes it possible to increase a current allowance of the boosting switching element.
(7) According to the fourth configuration example described above, in the configuration further including a controller for substantially inhibiting passage of electricity through the boosting switching element when a detection temperature of the boosting switching element has reached a specific boosting upper limit temperature, and substantially inhibiting passage of electricity through the step-down switching element when a detection temperature of the step-down switching element has reached a specific step-down upper limit temperature, it is configured in such a manner that the boosting upper limit temperature becomes higher than the step-down upper limit temperature. When configured in this manner, in comparison with the step-down switching element, the boosting switching element can be used at higher temperature, thereby increasing a current allowance of the boosting switching element.
(8) According to one aspect of the fourth configuration example, each of the boosting switching element and the step-down switching element is formed of multiple switching elements connected in parallel to one another, and the controller substantially inhibits passage of electricity when a highest detection temperature among multiple detection temperatures of the multiple switching elements forming the boosting switching element has reached the boosting upper limit temperature. According to this aspect, because it is possible to accurately detect the temperature of a switching element having the highest temperature among the multiple switching elements forming the boosting switching element, the boosting upper limit temperature can be set higher than the step-down upper limit temperature.
(9) Also, according to the fourth configuration example above, because the multiple switching elements forming the boosting switching elements and the step-down switching elements are almost identical to one another, the need to prepare multiple types of switching elements can be eliminated, thereby enabling a reduction in cost.
(10) In this embodiment, a current allowance of the boosting diode is also larger than a current allowance of the step-down diode. Hence, according to this embodiment, it is possible to achieve the configuration suitable to the circumstance that an amount of electricity passing through the element is larger in the boosting diode than in the step-down diode in the DC-DC converter for an electric automobile. It is thus possible to make the configuration of the DC-DC converter (in particular, the boosting diode and the step-down diode) most suitable, which makes it possible to reduce the cost and size thereof.
(11) According to the first configuration example described above, the boosting diode is formed of multiple diodes connected in parallel to one another, and the number of elements, which are the diodes connected in parallel, is larger in the boosting diode than in the step-down diode. It is thus possible to form the boosting diode and the step-down diode from an adequate number of elements corresponding to the electric specifications at the power driving time and at the regenerating time, which enables a reduction in cost. More concretely, in comparison with the configuration in the related art shown in Fig. 8, the number of elements forming the step-down diode can be reduced, thereby enabling a reduction in cost.
(12) Also, according to the first configuration example described above, because the multiple diodes forming the boosting diode and the step-down diode are almost identical to one another, the need to prepare multiple types of diodes can be eliminated, which enables a reduction in cost.
(13) According to the second configuration example described above, because heat release efficiency of the boosting diode is made higher than heat release efficiency of the step-down diode, it is possible to increase a current allowance of the boosting diode by reducing a temperature rise of the boosting diode to a small extent in comparison with the step-down diode.
(14) According to one aspect of the second configuration example described above, an element area of the boosting diode is made larger than an element area of the step-down diode. When configured in this manner, in comparison with the step-down diode, it is possible to secure a large heat-releasing area with the boosting diode, which makes it possible to increase the heat release efficiency of the boosting diode. Also, in comparison with the step-down diode, a loss in the boosting diode can be lessened, which makes it possible to lower a heat value of the boosting diode.
(15) According to the third configuration example described above, because heat resistance of the boosting diode is made higher than heat resistance of the step-down diode, in comparison with the step-down diode, the boosting diode can be used at high temperature, which makes it possible to increase a current allowance of the boosting diode.

It should be appreciated that the invention is not limited to the embodiment above, and can be modified in various manners without deviating from the scope of the invention.

For example, the above embodiment describes a case where it is configured in such a manner as to simultaneously establish a relation that a current allowance of the boosting switching element is larger than a current allowance of the step-down switching element and a relation that a current allowance of the boosting diode is larger than a current allowance of the step-down diode. However, it may be configured in such a manner that either one of these relations is established. For example, the first configuration example describes a case where it is configured in such a manner so as to simultaneously establish a relation that the number of elements is larger in the boosting switching element than in the step-down switching element and a relation that the number of elements is larger in the boosting diode than in the step-down diode. However, it may be configured in such a manner that either one of these relations is established.

Also, when it is configured in such a manner that the current allowance of the boosting switching element becomes larger than the current allowance of the step-down switching element, the current allowance of the step-down diode may be larger than the current allowance of the boosting diode.

In addition, the above embodiment describes IGBTs as an example of the switching elements. However, the switching elements may be bipolar transistors, MOS transistors, and so forth.

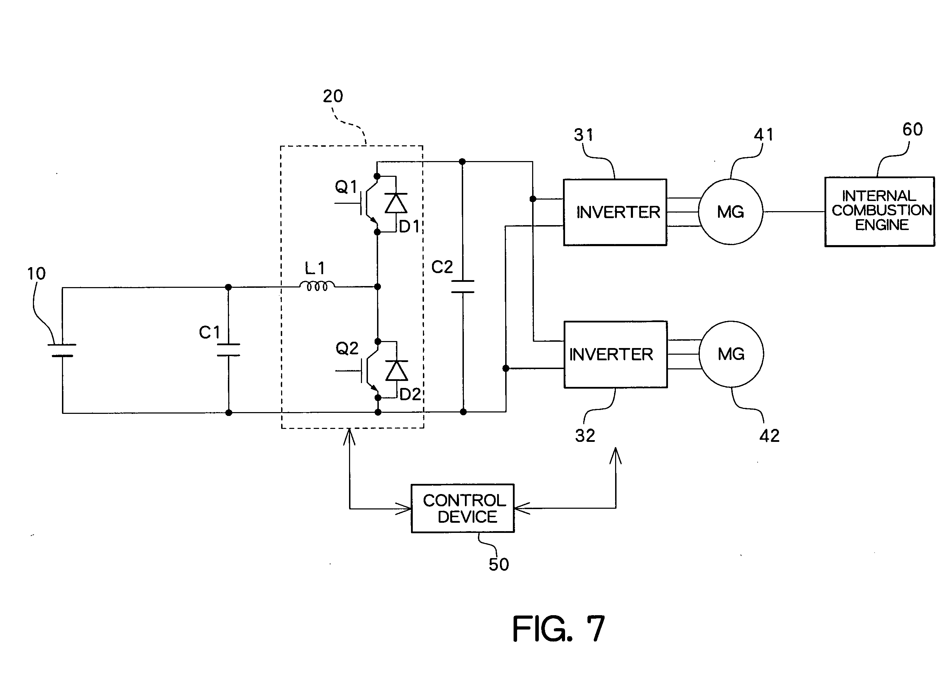

In the example of Fig. 1, one system of the inverter 30 and the drive motor 40 are connected to the DC-DC converter 20. However, multiple systems of inverters and drive motors may be connected to the DC-DC converter 20. For example, the electric automobile 1 of the embodiment maybe a hybrid vehicle of a so-called series and parallel type as shown in Fig. 7. In Fig. 7, two inverters 31 and 32 are connected to the DC-DC converter 20 in parallel, and drive motors 41 and 42 are connected to the inverters 31 and 32, respectively. Further, one drive motor 41 is connected to an internal combustion engine 60. The drive motor 41 performs both a starter function to start the internal combustion engine 60 and a power generation function to generate electric power by the driving force of the internal combustion engine 60. Meanwhile, the drive motor 42 performs both a function to drive the drive wheels on the electric power of the accumulation device 10 and the drive motor 41 and a power generation function to generate regenerative electric power at the time of braking or deceleration. According to the configuration of Fig. 7, the load factor is controlled, for example, by controlling electric power balance of the two drive motors 41 and 42 (a difference between electric power generation and electric power consumption).

## Claims

1. A DC-DC converter for an electric automobile interposed between an accumulation device and a drive motor of the electric automobile for raising electric power of the accumulation device by means of a reactor, a boosting switching element, and a boosting diode at the time of power driving by the drive motor and for lowering regenerative electric power by means of the reactor, a step-down switching element, and a step-down diode at the time of regeneration of the drive motor, wherein:
a current allowance of the boosting switching element is larger than a current allowance of the step-down switching element.

2. The DC-DC converter for an electric automobile according to claim 1, wherein:
the boosting switching element is formed of multiple switching elements connected in parallel to one another, and the number of elements, which are the switching elements connected in parallel, is larger in the boosting switching element than in the step-down switching element.

3. The DC-DC converter for an electric automobile according to claim 2, wherein:
the multiple switching elements forming the boosting switching element and the step-down switching element are almost identical to one another.

4. The DC-DC converter for an electric automobile according to claim 1, wherein:
heat release efficiency of the boosting switching element is higher than heat release efficiency of the step-down switching element.

5. The DC-DC converter for an electric automobile according to claim 4, wherein:
an element area of the boosting switching element is larger than an element area of the step-down switching element.

6. The DC-DC converter for an electric automobile according to claim 1, wherein:
heat resistance of the boosting switching element is higher than heat resistance of the step-down switching element.

7. The DC-DC converter for an electric automobile according to claim 1, further comprising:
a controller that substantially inhibits passage of electricity through the boosting switching element when a detection temperature of the boosting switching element has reached a specific boosting upper limit temperature, and substantially inhibits passage of electricity through the step-down switching element when a detection temperature of the step-down switching element hasreached aspecificstep-down upper limit temperature,
wherein the DC-DC converter is configured in such a manner that the boosting upper limit temperature becomes higher than the step-down upper limit temperature.

8. The DC-DC converter for an electric automobile according to claim 7, wherein:
each of the boosting switching element and the step-down switching element is formed of multiple switching elements connected in parallel to one another, and the controller substantially inhibits passage of electricity when a highest detection temperature among multiple detection temperatures of the multiple switching elements forming the boosting switching element has reached the boosting upper limit temperature.

9. The DC-DC converter for an electric automobile according to claim 7 or 8, wherein:
the multiple switching elements forming the boosting switching elements and the step-down switching elements are almost identical to one another.

10. The DC-DC converter for an electric automobile according to claim 1, wherein:
a current allowance of the boosting diode is also larger than a current allowance of the step-down diode.

11. A DC-DC converter for an electric automobile interposed between an accumulation device and a drive motor of the electric automobile for raising electric power of the accumulation device by means of a reactor, a boosting switching element, and a boosting diode at the time of power driving by the drive motor and for lowering regenerative electric power by means of the reactor, a step-down switching element, and a step-down diode at the time of regeneration of the drive motor, wherein:
a current allowance of the boosting diode is larger than a current allowance of the step-down diode.

12. The DC-DC converter for an electric automobile according to claim 10 or 11, wherein:
the boosting diode is formed of multiple diodes connected in parallel to one another, and the number of elements, which are the diodes connected in parallel, is larger in the boosting diode than in the step-down diode.

13. The DC-DC converter for an electric automobile according to claim 12, wherein:
the multiple diodes forming the boosting diode and the step-down diode are almost identical to one another.

14. The DC-DC converter for an electric automobile according to claim 10 or 11, wherein:
heat release efficiency of the boosting diode is higher than heat release efficiency of the step-down diode.

15. The DC-DC converter for an electric automobile according to claim 14, wherein:
an element area of the boosting diode is larger than an element area of the step-down diode.

16. The DC-DC converter for an electric automobile according to claim 10 or 11, wherein:
heat resistance of the boosting diode is higher than heat resistance of the step-down diode.

17. A motor driving device for an electric automobile, **characterized by** including the DC-DC converter for an electric automobile set forth in any one of claims 1 through 16.
